# EUROPEAN PATENT APPLICATION

(11) **EP 1 273 898 A2**
(43) Date of publication of application: **08.01.2003**
(21) Application number: 02254690.7
(22) Date of filing: 03.07.2002
(51) Int. Cl.: G01M 3/36

(54) **Method and apparatus for testing the integrity of gas-filled flexible packages**

(30) Priority: 03.07.2001 GB 0116266; 06.11.2001 GB 0126677
(71) Applicant: ISHIDA EUROPE LIMITED, Birmingham B32 3DB (GB)
(72) Inventor: Bennett, Robert, West Midlands, WS3 4EQ (GB)
(74) Representative: Stuart, Ian Alexander

(57) **Abstract**

Gas-filled packages are tested by lowering a test head (50) onto each individual package as it arrives at a test station. The displacement of the test head and the force applied are accurately controlled and measured by means of an actuator system employing a servo motor (80) coupled through a high-resolution load-matched ball screw. The servo motor (80) may be operated in torque control mode so that an accurately known force can be applied.

Before reaching the test station, a package may pass under a contact element which is pivotably mounted over the path so that a passing package pivots it to an extent dependent on the height of the package. The degree of pivoting is measured to provide an indication of package height. The contents of the package may be conditioned and stabilized by the contact with the element.

## Description

The present invention relates to package handling apparatus, particularly to apparatus for handling packages which are gas-filled (generally air-filled), gas-tight bags of loose articles, typically snack foods. It is particularly concerned with apparatus for testing the seal quality or leakiness of such packages. It is also concerned with conditioning apparatus which may be used to prepare packages for such testing.

Many types of apparatus for testing package or bag integrity have been proposed. Generally a test head is lowered onto a bag to apply a load which will cause a leaky bag to deflate somewhat. To achieve a measurable effect in a short time, quite large loads may be applied (e.g. 2.5kg), with considerable risk of damage to the packaged articles. The system tends to be of high inertia so it is liable to be slow, inaccurate and inconsistent. It is difficult to set, e.g. for adapting to different package types. Generally, after each test, the head is raised to maximum height, wasting much time.

In various aspects the invention provides package handling apparatus having one or more of the following:-
a) seal test apparatus for testing the integrity of gas-filled flexible packages, having a test head to be moved into contact with a package and means for urging the motion of the test head and providing outputs indicative of the position of the head and force applied thereby; said means comprising a servo motor linked via a ball screw to the head. The outputs may be provided by the servo motor.
b) package measuring apparatus comprising an emitter for emitting a radiation curtain, and a detector array for receiving the curtain and providing a corresponding output. The output indicates how much of the curtain is received and how much is obstructed by an interposed object, e.g. an article being displaced between the emitter and the detector. A linked computer can compute values indicative of article dimensions. The emitter may employ a linear array of optical fibres for emitting an array of laser beams.
c) package conditioning apparatus comprising a rumbling conveyor formed of a series of tapered rollers, alternate rollers tapering in opposite senses. The rollers are preferably spaced apart. A nip may be defined between the conveyor and a conditioning belt for applying pressure from above on articles being conveyed.
d) package sensing apparatus for sensing the height of packages conveyed along a path. The apparatus is advantageously used in conjunction with the seal test apparatus (a). The sensing apparatus employs a contact element pivotably mounted over the path. The element defines an elongate contact surface, disposed so that its downstream end is normally nearer the path than the upstream end and is pivotable upwardly by a package conveyed along the path. The amount of pivotting is determined by the height of the package (possibly affected by the conditioning effect of contact with the belt). It is measured by a sensor, preferably employing an encoder. The information may be fed to a downstream device (particularly a seal test apparatus) so that it can be prepared to receive the package (e.g. by moving its test head to the appropriate height).

The contact element may comprise an endless belt which provides the contact surface. The belt is generally driven preferably at the same speed as the packages are conveyed along the path. Alternatively, the contact element may have a contact surface adapted for low-friction contact with packages, e.g. being provided by a series of low back-pressure rollers.

In a further aspect the invention provides a method of testing the integrity of gas-filled flexible packages using apparatus (a) above, preferably in conjunction with (b) and/or (c) and/or (d).

Some embodiments of the invention will now be described by way of example with reference to the accompanying drawings in which:
Fig. 1 is a schematic side elevation of apparatus which comprises a first embodiment of the invention, the apparatus including a conditioning section and a test section;
Fig. 2A and 2B are plan and side elevation views of a roller array of the conditioning section;
Fig. 3 is a front elevation of a light curtain device for gauging package height;

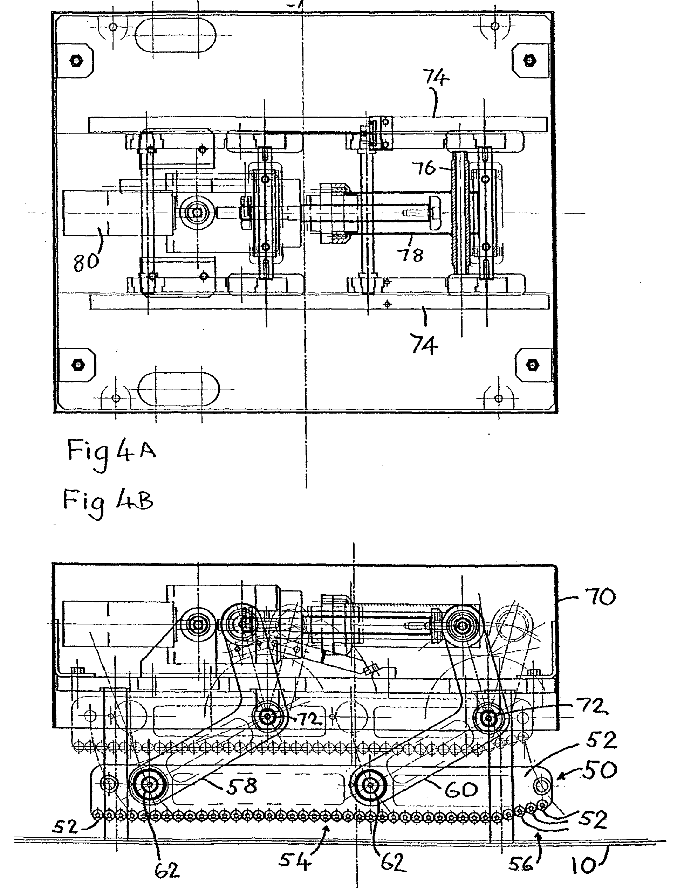

Fig. 4A and 4B are plan and side elevation views of the test section;

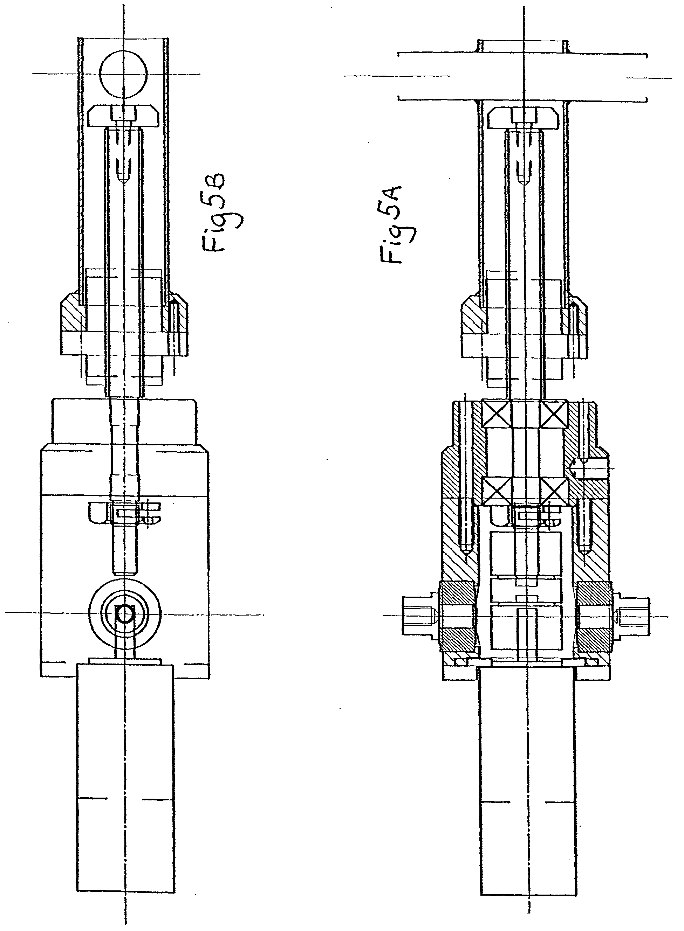

Fig. 5A and 5B are plan and side elevation views on a larger scale of the actuator assembly of the test section;
Fig. 6 is a schematic graph showing test results; and
Fig. 7 is a view similar to Fig. 4B showing a test section downstream of a package sensing apparatus.

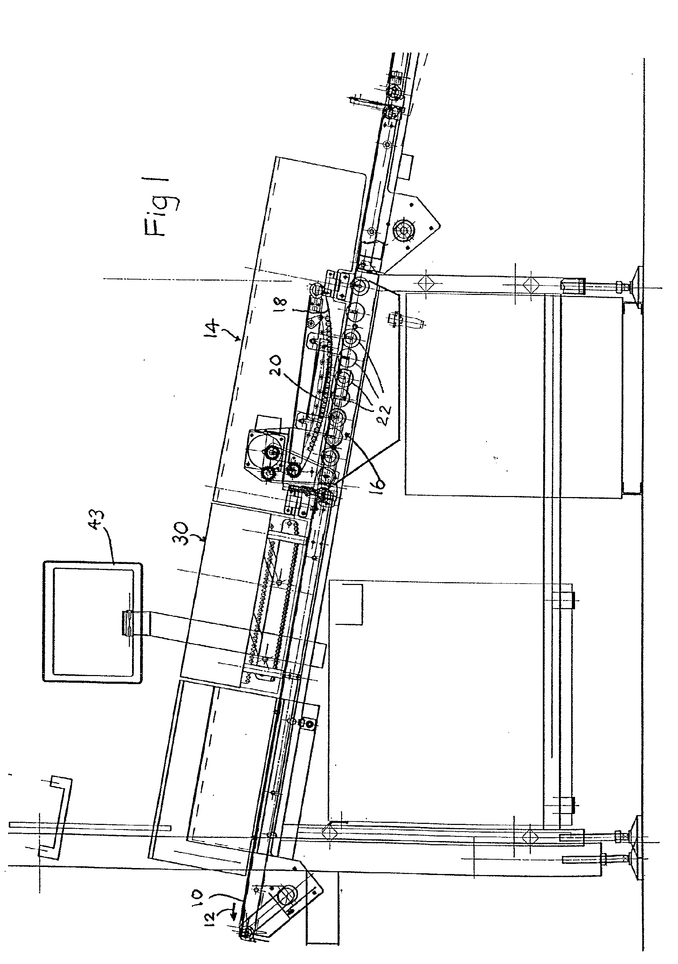

Fig. 1 shows, in side elevation, part of a production line for receiving articles in the form of gas-filled bags (typically, bags of crisps) from a package filling and sealing machine, and testing the packages, prior to their placement in trays or cartons. Generally, between the bag filling and sealing apparatus (which may be off-line) and the illustrated apparatus there are one or more intermediate stations, e.g. for orienting the packages.

The packages are carried on a conveyor belt 10 and other conveying means having a direction of displacement as shown by the arrow 12. In the embodiment shown in Fig. 1, this conveying direction slopes gently upwards.

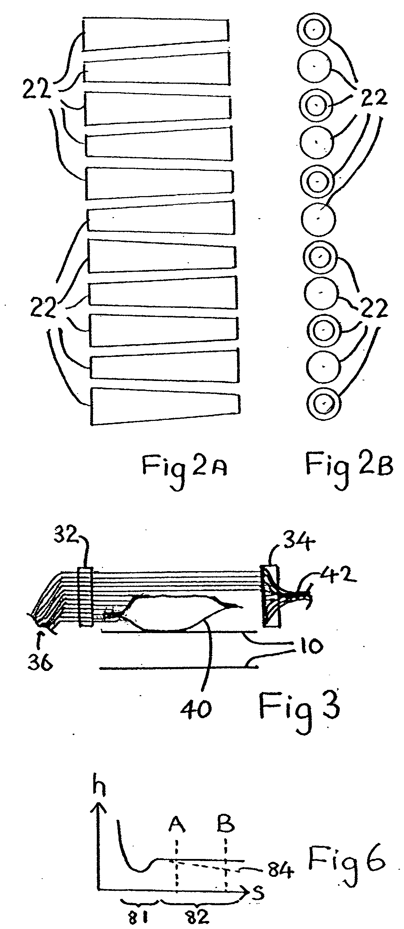

The packages are first conveyed to a conditioning station 14. Here the articles are agitated by passage over a rumbling conveyor 16 while they are pressed gently from above by an overhead conveyor 18 whose lower run is pressed down by a catenary pressing element 20. This overhead conveyor assembly 18,20 may be generally as described in our application WO 95/32123. That application also discloses the use of a rumbling conveyor, in the form of a conveyor belt having two square-section rollers in contact with the underside of the conveyor belt. Upon rotation, the corners of the square rollers cause the conveyor belt to rise and fall again, in a flapping motion. Whereas this kind of rumbling conveyor could be used in the present invention, we prefer to use the type shown in Figs. 1, 2A and 2B. This conveyor employs a series of tapered rollers 22 having horizontal axes of rotation, alternate rollers tapering in opposite senses. They are rotated in the same sense, so that a package is conveyed along, being jolted as it is conveyed. This provides a thorough but gentle shaking. Furthermore, the gaps between the rollers allow debris (e.g. crisps from broken bags) to fall through, so that it does not enter the next stage.

Downstream of the conditioning station 14 is the testing station 30. Packages are conveyed through this on the belt 10.

Before entering the test station proper, packages pass through a curtain of light extending between an emitting array 32 and a photocell array 34, arranged at respective sides of the belt 10, as shown in Fig. 3. Laser light is conveyed to a vertical line of emission points in the emitter unit 32 along a series of fibre optic cables 36. There are corresponding aligned photocells. As shown in Fig. 3, a package 40 which has arrived at the light curtain partially occludes it. The outputs of the photocells are fed along a cable 42 to a remote control unit (RCU) employing a computer 43, which uses the data as identification of the maximum height of the package. The nature of the packages is generally such that, after conditioning, they are pillow-shaped, with the upper surface of the bag supported primarily by the cushion of gas (air) within the bag, rather than by contact with the solid contents.

Since the speed of the conveyor 10 is known, the passage of the bag through the light curtain can also be used to measure the length of the bag. The measurements can be used to identify the type of package, from a range of packages that differ in dimensions and whose data have been fed into the computer 43.

The test section 30 includes a test head 50, and means for controllably moving it towards and away from the conveyor 10. The test head 50 is shown as having an array of non back-pressure rollers which extend transversely across the conveyor 10 and define a main contact surface portion 54 parallel with the conveyor surface, bending upwardly at the upstream side to define an angled lead-in surface 56. (Instead of using the array of non-driven rollers, it would be possible to use a belt driven in synchronism with the conveyor 10.)

The test head 50 includes a body 52 which is mounted to two pairs of L-shaped levers 58,60. There is one pair of levers 58,60 at each lateral side of the body 50. The lower ends of the lower limbs of corresponding levers are linked by shafts 62.

The test section includes a fixed body 70. The L-shaped levers 58,60 are mounted to the body by pivot shafts 72 which connect corresponding levers at the intersection of their limbs. Thus the test head 50 is carried by parallelogram linkages, so that it moves with its main contact surface portion 54 maintained parallel with the surface of the conveyor 10. At each side of the test section, the upper limbs of the two levers 58,60 are linked to a respective longitudinally extending shaft 74. The two shafts 74 are linked by a transverse rod 76 which passes through a displaceable piston sleeve 78. The piston sleeve 78 is constrained by the parallelogram linkages to move approximately horizontally (actually through an arc) and its movement causes pivoting of the levers 58,60, with concomitant rising or falling of the test head 50.

The piston sleeve 78 is linked to a servo motor 80 via a ball screw coupling. This employs a high-resolution load-matched ball screw for maximum sensitivity and reduced backlash. Furthermore the head is biased for zero backlash measurements.

The servo motor can be operated in torque control mode, so that an accurately known force is applied downwardly by the test head. This is made possible by the simple and direct mechanical coupling between the servo motor and the head (via the ball screw and the lever arms). The motor 80 is pivotably mounted to the fixed body 70 through stub shafts. It pivots slightly to allow the arcuate movement of the piston sleeve 78.

In normal use, the arrival of a package to be tested is detected by the light curtain device 32,34. This also provides data indicating the height of the package 40. This information is used to control the servo motor 80, so that the head 50 is raised sufficiently to allow the package to pass beneath it. The head does not need to be raised each time to the maximum height. A further possibility is for the heights of a multiplicity of bags to be recorded, and for a computer to determine an expected bag height range or "tolerance band". This can be used to provide a standard height to which the head is raised, and/or to cause rejection of articles which are outside the tolerance band. This could, for example, prevent the test head from being lowered onto debris such as escaped crisps which had reached the test section.

When the light curtain device has determined that a proper package has passed it, the computer can determine precisely when the package will be beneath the test head, since it also receives data about the conveyor belt speed. The head is therefore lowered by actuation of the servo motor 80. It is lowered in a controlled fashion, with controlled torque. The height of the head is monitored, generally by monitoring the operation of the servo motor. Fig. 6 is a schematic graph showing the height (h) of the test head, versus distance (s) travelled by the article. Initially, when the head contacts a balloon-like article, it tends to sink down and rise up again, giving a dip region 81. Furthermore oscillations are damped by the servo motor. For a non-leaking bag, the dip is followed by a horizontal region 82, as the head applies a constant torque and is supported at constant height. However, if the bag leaks, the head will descend, leading to the downward gradient of the broken line 84. A leaky bag can be detected by noting the values of the height parameter at two spaced intervals A and B, and comparing them.

The test assembly can also be used in positional speed mode.

To determine the appropriate torque to be used for testing, a destruction test may be carried out on a bag as follows. After conditioning, a bag is placed beneath the test head, with the conveyor 10 stationary. The servo motor 80 is then operated to cause the test head to descend, until the bag bursts. The pressure (or torque) at which this happens is noted, and a fraction of this (e.g. 40%) is then used as the standard applied value for testing similar bags.

The head measures both torque and height, which can be done using the servo motor. It would also be possible to include a load cell, which could give greater accuracy for the torque/pressure values.

The seal test apparatus of the present invention can handle packages very gently, reducing the risk of bursting or scratching. Typically the load applied is 1.5kg or less. Nevertheless the extremely sensitive height sensing (due to the direct linkage to the servo motor via the ball screw) enables even tiny leaks to be detected, at high travel speeds. A throughput of 150 bags per minute or more can be achieved.

A conventional apparatus has to be mechanically reset each time the product changes or if any parameter is varied. With this apparatus, changes in height are automatically catered for by the light curtain device 32,34. If recalibration of the load to be applied is required, this is done simply, as described above. No mechanical alteration is required; the computer controls the torque to be applied by the servo motor. The ability to vary the test load to match the type of product provides the 'best-fit' compromise between maximum accuracy of leakage measurement and product 'fragility'. Depending on the customer, this will be the choice between using the maximum possible pressure for the detection of the smallest leaks or the minimum pressure to minimise product damage or burst bags.

The head is kept in contact with the bag for just the test period, minimising the risk of product jams. The default path for the head is 'up' leaving pathways clear except during power up/down phases.

Stability of test head geometry is crucial due to the fine measurement tolerances required, especially with short contact periods at high speed. Sanitation procedures may require the test head to be removed and replaced occasionally. This can be done precisely without the need for calibration. Problems with product debris affecting or causing variations in the 'home' point are eliminated. There is no need to clear product from the machine during start-up as with previous designs. Parameters can be altered 'on-the-fly' and will take immediate effect without the need to stop the machine.

The treatment of 'gross leakers', below minimum height bags and above maximum height bags can be handled individually to suit customer requirements and plant layout. Air divert direction, delay and duration can be individually selected on the remote console of the RCU.

Desirably, the seal tester's product conveyor belt is accurately controlled to maximise measurement stability and repeatability. Speed can be reduced for longer test periods as typically required for larger bags. Speed can be profiled to maximise test times at higher speeds for greater accuracy.

The feedback from the test-head needs to match as closely as possible the height and hence the deflation curve of the product as it passes underneath. Servo feedback or non-contact height measurement may be used to provide an accurate (circa 1 µm), linear reading.

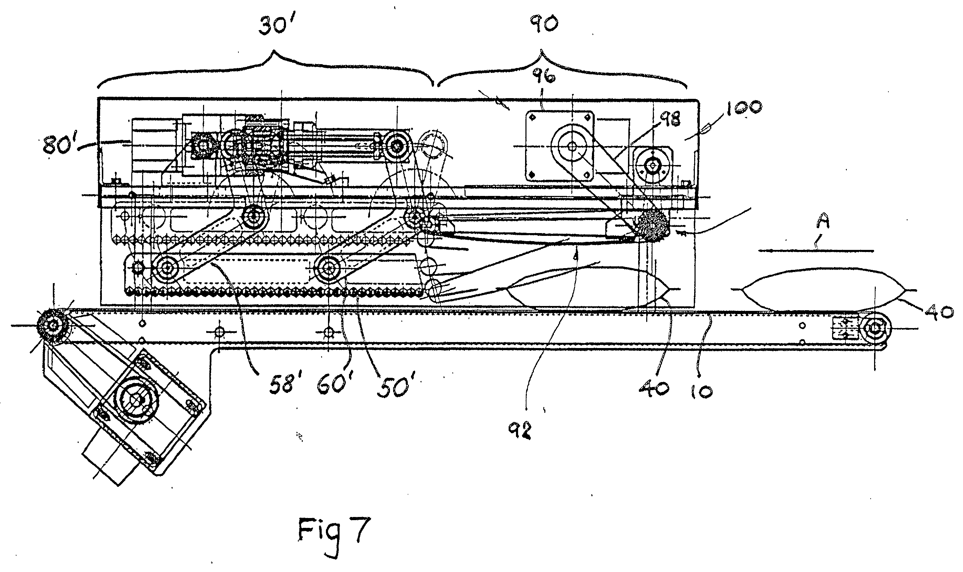

Fig. 7 shows a test section 30' with an associated sensing apparatus 90. The test section 30' may be essentially the same as the test section 30 already described, with a test head 50' mounted on L-shaped levers 58', 60' movable by means of a servomotor 80'. The sensing apparatus 90 may take the place of the light curtain device 32, 34. It includes a pivotable endless belt 92 (shown in several angular positions) extending in the package conveying direction (see arrow A). The belt 92 in pivotally mounted by a transverse pivot 94 at the end which is upstream (relative to the package conveying direction). This is also its drive end. It is driven by a motor 96 via a drive belt 98. An encoder 100 (in this example a 2000 per rev encoder) measures the angle of the belt 92.

The belt is lightly biased in an anti-clockwise sense so that its free downstream end is close to or in contact with the upper surface of the package conveyor 10. A package 40 conveyed by the conveyor 10 enters the nip defined between the conveyor 10 and the pivotable belt 92. It contacts the belt 92, whose surface is moving at substantially the same speed as the conveyor. The contact causes the belt 92 to pivot clockwise sufficiently to allow the package to pass beneath it. In the process the package may undergo some stabilisation of its contents. The amount of pivoting is measured via the encoder 100. This provides data to control the servomotor 80' of the test section 30' so that it can position the test head 50' appropriately.

This device enables packets to be fed into the test head smoothly. The head is positioned to the correct height for each packet by means of feedback from the encoder. This allows a much more controlled application of the test head force onto the bag. The feedback is more consistent than can be achieved with the photocell (light curtain) height measuring unit described above, as the bag will be stabilized to some extent by the pivotable belt. The belt assembly has been designed to be as light as possible to prevent seal damage or popping of bags caused by the inertia of the present heads.

## Claims

1. Seal test apparatus for testing the integrity of gas-filled flexible packages, having a test head to be moved into contact with a package and means for urging the motion of the test head and providing output data indicative of the position of the head and/or force applied thereby; said means comprising a servo motor linked via a ball screw to the head.

2. Apparatus according to claim 1 wherein the servo motor provides output data indicative of head position.

3. Apparatus according to claim 2 wherein the servo motor also provides output data indicative of force applied.

4. Apparatus according to claim 1 or claim 2 including a load cell arranged to provide an output indicative of force applied.

5. Apparatus according to any preceding claim which includes a fixed frame, linkages pivotably mounted to the frame at intermediate regions of said linkages, said linkages having upper and lower end regions; said test head being coupled with the lower end regions of the linkages, and said servo motor being linked via said ball screw to the upper end regions of the linkages.

6. Apparatus according to any preceding claim wherein the ball screw is a high-resolution load-matched ball screw.

7. Package sensing apparatus for sensing the height of packages comprising a conveyor for conveying packages along a path, a contact element pivotably mounted over the path, and a pivoting sensor; wherein the contact element defines an elongate contact surface, disposed so that its downstream end is normally nearer the path than the upstream end and is pivotable upwardly by a package conveyed along the path, the amount of pivotting being determined by the height of the package, and wherein said sensor measures the amount of pivotting and provides a corresponding output signal.

8. Apparatus according to claim 7 wherein said sensor comprises an encoder.

9. Apparatus according to claim 7 or claim 8 wherein the contact element comprises an endless belt which provides the contact surface.

10. Seal test apparatus according to any of claims 1-6 including package sensing apparatus according to any of claims 7-9 located upstream of the test head, and control means coupled to the sensor to receive said output signal thereof and arranged to control the operation of the test head in dependence thereon.

11. Seal test apparatus according to any of claims 1-6 including, upstream of the test head, package sensing apparatus comprising means for conveying packages along a path, and a radiation emitter and a radiation detector confronting each other across the path, wherein the radiation emitter is adapted to emit radiation in the form of a curtain which is transmitted towards said detector so as to be occludable by a package conveyed along the path to an extent dependent on the size of the package; and wherein the detector is adapted to provide an output dependent on the proportion of the radiation curtain which it receives; and control means coupled to the detector to receive said output signal thereof and arranged to control the operation of the test head in dependence thereon.

12. A method of testing the integrity of a gas filled package comprising passing it through seal test apparatus according to any of claims 1-6, 10 or 11.

13. A method according to claim 12 wherein the test head is lowered onto the package under test and applies predetermined force for a predetermined period, and downward displacement of the head during that period is measured to provide an indication of package integrity.

14. A method according to claim 12 or 13 which employs apparatus according to claim 10 or claim 11 and wherein, prior to arrival of a package at the test head, the test head is raised to a suitable height determined in dependence on the output signal from the package sensing apparatus.

15. A method according to any of claims 12-14 including a preliminary calibration step in which a package is located under the test head, and the test head is urged against the package with increasing force until the package bursts, the bursting force being determined; and in subsequent tests the test head is urged against packages with a force equal to a predetermined fraction of the bursting force.
